# EUROPEAN PATENT SPECIFICATION

(11) **EP 1 545 046 B1**
(45) Date of publication and mention of the grant of the patent: **14.01.2009**
(21) Application number: 04105473.5
(22) Date of filing: 03.11.2004
(51) Int. Cl.: H04L 7/033, H04L 25/06, G06F 1/06

(54) **Improvements to data recovery circuits using oversampling for best data sample selection**
Verbesserungen für Datenrückgewinnungsschaltungen mit Überabtastung zu Wahl des besten Datenabtastwertes
Améliorations aux circuits de récupération de données utilisant suréchantillonnage pour la sélection du meilleur échantillon des données

(30) Priority: 19.12.2003 EP 03368124
(43) Date of publication of application: 22.06.2005
(73) Proprietor: International Business Machines Corporation, Armonk, NY 10504 (US)
(72) Inventor: Vallet, Vincent, 91540, Mennecy (FR)
(74) Representative: Therias, Philippe

(56) References cited:
- EP-A- 1 199 837
- US-A1- 2003 095 619
- US-A1- 2004 264 614
- US-B1- 6 584 163

## Description

### FIELD OF THE INVENTION

The present invention relates to high speed serial communications/data transfers between integrated circuits or systems and more particularly to a method and circuit for implementing the best data sample selection in a data recovery circuit based on an oversampling technique when the incoming data stream suffers of jitter and is skewed with respect to the reference clock.

### BACKGROUND OF THE INVENTION

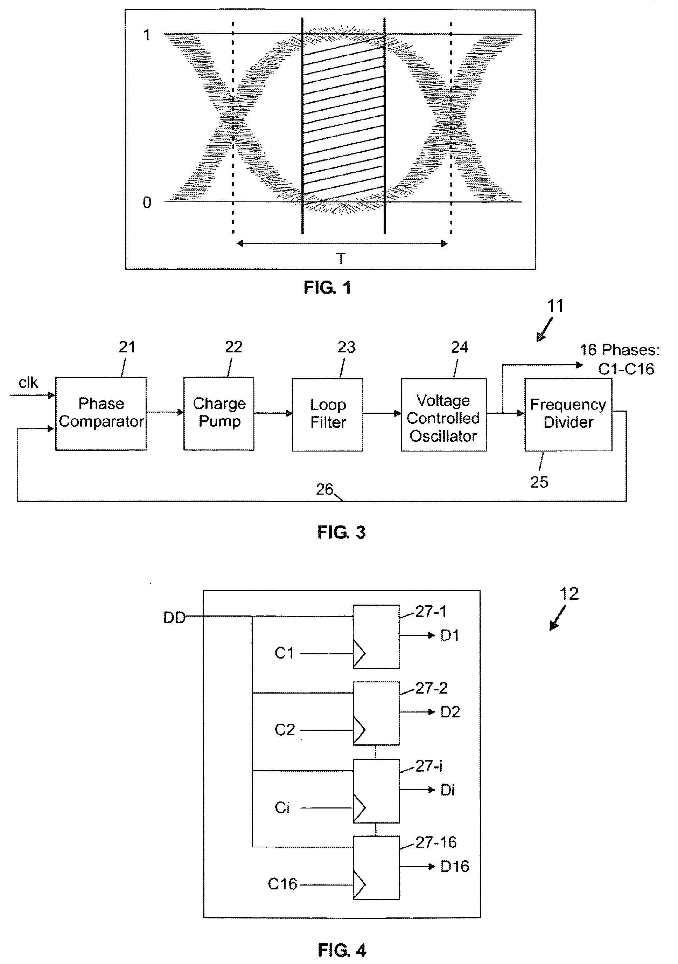

In the field of high speed serial communications/data transfers between integrated circuits or systems, data recovery circuits are extensively used. Let us assume the presence of a separate oversampling circuit generating a plurality of data samples during each bit period. We also assume the presence of an edge detector circuit able to detect the occurrence of a data transition between two consecutive data samples. The best sample to represent the recovered data is the sample which is the farthest from the data edges (or data transitions). FIG. 1 shows a typical eye diagram for a high speed serial data link. Data jitter or phase error (skew) between clock and data thus significantly reduce the useful sampling window. One can notice that the reliable sampling window (hatched area) corresponding to the zone where the data bit is guaranteed to be stable can be significantly shorter than the bit period T. Furthermore, circuit process deviations, operating temperature and power supply variations can also have a negative impact on sampling window width and thus on the targeted circuit accuracy.

The selection of the best sample generally relies on a training pattern specific to the data communication protocol in consideration. The training pattern is used during a calibration step to determine which clock phase is the best to recover the data and this calibration step is repeated whenever required. As a consequence, a data recovery circuit built for a given communication data protocol is generally not suitable to recover data sent using a different data communication protocol as it will be unable to recognize the training pattern and thus to select the best data sample. On the other hand, the duration of said training patterns is relatively short compared to the data duration and therefore are not representative of the jitter affecting the data. Moreover, when there is a low number of physical links, it is possible to use phase locked loop oscillators (PLLs) to individually recover the data stream by locking the PLL frequency on the data stream frequency and by generating a sampling clock positioned right in the middle of the data bit. However as soon as there is a large number of data links to handle, it becomes impossible to implement as many PLLs as data links. Finally, the different data link signals may be skewed together by a relatively large amount of time for layout or fabrication process reasons so that it is not possible to reliably sample each data link using a same clock phase.
According to US 20030095619 A1 there is disclosed a sample selection and data alignment circuit that is able to recover (retime) a data on a predefined phase of a multiphase clock signal. A plurality of over sampled signals (SO, ... , S.sub.n-1) is obtained by over sampling an incoming serial binary data (bits) stream with the n phases (C.sub.0, ... , C.sub.n-1) of a multiphase clock signal. A reliable over sampled signal is selected according to a select signal (G.sub.0... , G.sub.n-1) generated by an edge detector which designates which over sampled signal is the best for subsequent processing. In essence, the circuit comprises a plurality of n substantially identical logic blocks. The first logic block includes a latch receiving sampled signal So on its data input and the phase clock signal C.sub.0 on its clock input. Each other logic block, e.g. logic block i, further includes a multiplexer having two inputs, the first input is connected to the output of the latch of the preceding logic block and the second input receives sampled signal S.sub.i. The multiplexer is controlled by a signal which is either G.sub.1 or the control signal of the following multiplexer. Finally, the output of the multiplexer is connected to the data input of the latch, the clock input of which receives clock signal C.sub.i. The output of the latch in the last logic block is connected to the clock input of an output latch, the clock input of which is coupled to a phase in opposition with phase C.sub.n-1. The output latch stores the recovered data during a full clock period.

US 6,584,163 meanwhile discloses a shared data and clock recovery circuit including a clock synthesizer for generating sampling signals having different phases, a multiple transition detector for receiving a data stream and sampling signals, and for detecting edges in a data stream in response to the sampling signals, a counter and accumulator for detecting the time occurrences and total number of edges, and for performing weighted average calculation to select one of the phases, a decision circuit for detecting the phase difference between a source clock and a local clock such that if the PPM difference between the source clock and the local clock is at least 200 PPM, then selection of a phase is based upon stored historical information, and if the PPM difference between the source clock and the local clock is less than 200 PPM, then selection of a phase is based on a weighted averaging calculation.
Consequently, there is a real need for an improved data recovery circuit that would be independent of any data communication protocol and capable to support jitter undesirable effects and skew, i.e. the phase difference between any data link signal and an arbitrary synchronous reference clock.

### SUMMARY OF THE INVENTION

It is therefore a primary object of the present invention to provide an improved data recovery circuit the operation of which is independent from the data communication protocol in consideration because it only relies on data transitions.

It is another object of the present invention to provide an improved data recovery circuit that is able to handle a great number of data links without implementing as many PLLs as there are data links.

It is another object of the present invention to provide an improved data recovery circuit that allows to reliably sample each data link among a plurality of data links using a same clock source, so that any phase difference (skew) between a data link signal and an arbitrary synchronous reference clock can be supported.

It is still another object of the present invention to provide an improved data recovery circuit that allows to reliably sample an incoming data stream suffering of jitter.

It is still another further object of the present invention to provide an improved method for selecting the best data sample from a set of data samples that result of oversampling the data to recover.

According to the present invention there is described an improved method and circuit for implementing the best data sample selection in a data recovery (DR) circuit based on an oversampling technique when the incoming data stream suffers of jitter and skew. The data to recover is first oversampled using the multiple phases of a reference clock to generate a set of data samples. An edge detection circuit is used to locate the position of edges in the set of data samples. A data edge memory memorizes the bit edge positions. A selection determination circuit provides selection signals to indicate which data sample is the farthest from the bit edges. A selection validation circuit validates the selection signals to avoid any false determination in said selection signals. Validated selection signals are stored in a selection memory. Finally, a data sample selection circuit processes both the data samples and the memorized validated selection signals to determine which data sample is the best candidate to recover the data. The performance of a data recovery circuit being tied to its jitter tolerance, the improved DR circuit that is able to store the position of data edges over a long period of time, can therefore take into account the data jitter to select the best sample. In addition, because the choice of the best data sample only depends on data transitions, the improved DR circuit does not rely on any training pattern and thus is totally independent of the data communication protocol. Finally, the data recovery mechanism of the present invention is also independent of the number of data links.

The novel features believed to be characteristic of this invention are set forth in the appended claims. The invention itself, however, as well as other objects and advantages thereof, may be best understood by reference to the following detailed description of an illustrated preferred embodiment to be read in conjunction with the accompanying drawings.

### BRIEF DESCRIPTION OF THE DRAWINGS

FIG. 1 shows a typical eye diagram showing a jittered data.
FIG. 2 is the block diagram of the improved data recovery circuit according to a preferred embodiment of the present invention.
FIG. 3 is a circuit diagram of the multiple phase generator of FIG. 2 using a standard phase locked loop (PLL) oscillator designed to generate N=16 phases.
FIG. 4 is the circuit diagram of the oversampling circuit of FIG. 2.
FIG. 5 is the circuit diagram of the edge detection circuit of FIG. 2.
FIG. 6 is the circuit diagram of the data edge memory of FIG. 2.
FIG. 7 is the circuit diagram of the selection determination circuit of FIG. 2.
FIG. 8 is the circuit diagram of the selection validation circuit of FIG. 2.
FIG. 9 is the circuit diagram of the selection validation memory of FIG. 2.
FIG. 10 is the circuit diagram of the data selection circuit of FIG. 2.

### DESCRIPTION OF A PREFERRED EMBODIMENT

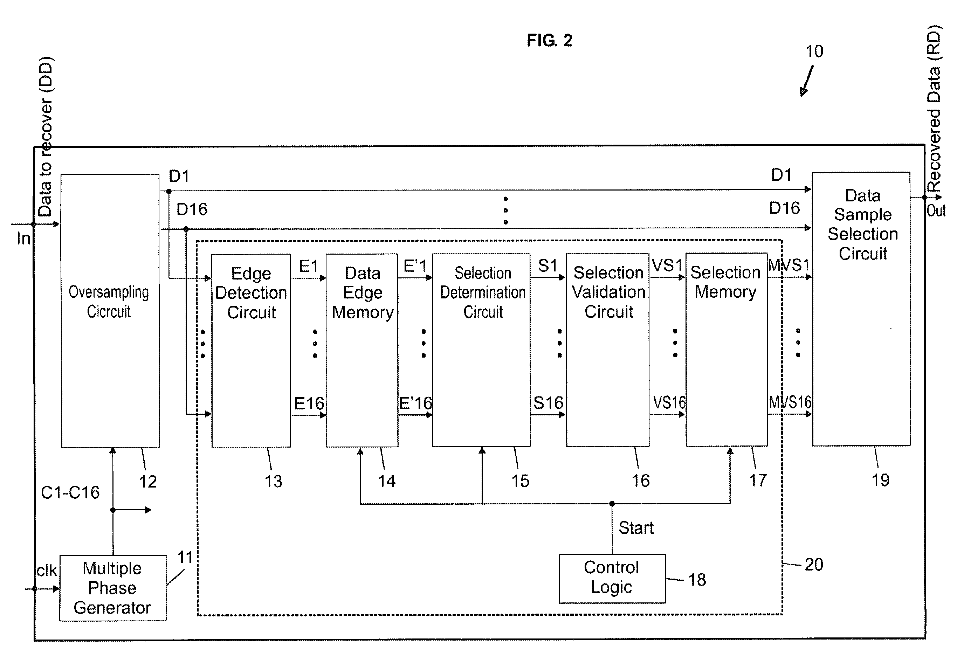

A preferred implementation of the improved data recovery circuit using oversampling for best data sample selection according to the present invention is shown in FIG. 2 where it bears numeral 10. The disclosed circuit and method operate independently of the number of data links so that the data recovery mechanism of the present invention will be only described hereinbelow for one data link. Now turning to FIG. 2, the improved data recovery circuit 10 first includes a multiple phase generator 11 driven by a reference clock synchronized with the data link. The multiphase clock generator 11 is required to generate an adequate number n of clock phases, e.g. 16 in the present implementation, referenced C₁ to C₁₆, that are derived from a reference clock labeled clk. Said multiple phases are applied to an oversampling circuit 12 (and to other circuits whenever necessary) that receives the stream of serial data to recover at the In terminal to generate data samples, referenced D₁ to D₁₆. It further includes an edge detection circuit 13, a data edge memory 14, a selection determination circuit 15, a selection validation circuit 16, and a selection memory 17 that are connected in series. Control logic circuit 18 plays the role of a state machine vis à vis some blocks. Logic circuits and memories 13 to 18 form the so-called decision circuit referenced 20. Finally, the data samples D₁ to D₁₆ and the signals MVS₁ to MVS₁₆ output by the selection memory 17 are applied to data selection circuit 19. In essence, the incoming stream of serial data is continuously oversampled in oversampling circuit 12 by means of said multiple phases of the reference clock. Each data sample is compared in edge detector circuit 13 to the data sample collected with the next adjacent clock phase to determine the presence of a data edge or transition and the edge information i.e. the edge positions, is collected in data edge memory 14 for a duration that can be tuned. This data edge memory 14 can be cleared at regular time intervals. Tuning and clearing are performed by control logic circuit 18. The selection determination circuit 15 uses the memorized edge information to indicate which data sample is the farthest from the data edges. Selection validation circuit 16 has the key role of validating the selection to avoid false determination due to jitter and skew. The validated values of the selection signals are memorized in selection memory 17, so that these values can be used while new data edges are processed and new selection signals are updated. Finally, the memorized validated selection signals MVS₁ to MVS₁₆ and the data samples D₁ to D₁₆ are exploited in data selection circuit 19 to recover the data. As apparent in FIG. 2, the recovered data RD is available at the Out terminal. Block 20 which is composed of a plurality of logic circuits and memories will be referred to hereafter as the decision circuit. The decision circuit is thus based on the detection of data edges or transitions in the set of data samples to drive the data sample selection circuit 19 in order to select the best sample to be kept, i.e. the recovered data RD.

### 1. Description of the multiphase clock generator 11

The preferred implementation uses a phase locked loop oscillator (PLL) to generate n=16 multiple phases of a reference clock. The clock frequency can be the same as the data frequency, i.e. one data bit per clock period or half of the data frequency, i.e. two data bits per clock period, also referred to as single data rate (SDR) or double data rate (DDR) respectively. The reference clock may be synchronously transmitted by the distant apparatus or may be recovered from the data stream using standard clock recovery circuits. A conventional PLL based multiphase clock generator is shown in FIG. 3 where it bears numeral 11. Now turning to FIG. 3, the reference clock signal clk and the loop signal that is internally generated by the PLL circuit 11 are applied to the phase comparator 21, which in turn generates a signal that is supplied to a charge pump 22. The latter outputs a controlled signal that is fed to a voltage controlled oscillator (VCO) circuit 24 via a loop filter 23. The VCO circuit 24 is coupled to a frequency divider 25 that supplies said loop signal on line 26. The desired number N of oversampling clock phases, sixteen in the instant case, obtained either on the rising edge or the falling edge of the reference clock, are referenced C₁ to C₁₆.

### 2. Description of the oversampling circuit 12

The oversampling circuit 12 collects either one bit (SDR) or two consecutive bits (DDR in sixteen samples. The sampling is done on each phase C₁ to C₁₆. An example of a simple implementation of oversampling circuit 12 is shown in FIG. 4. Now turning to FIG. 4, oversampling circuit 12 includes 16 flip-flops 27-1 to 27-16 that are respectively controlled by the sixteen phases C₁ to C₁₆. D₁ to D₁₆ represent the 16 data samples available at the output of their respective flip-flop.

### 3. Description of the edge detection circuit 13

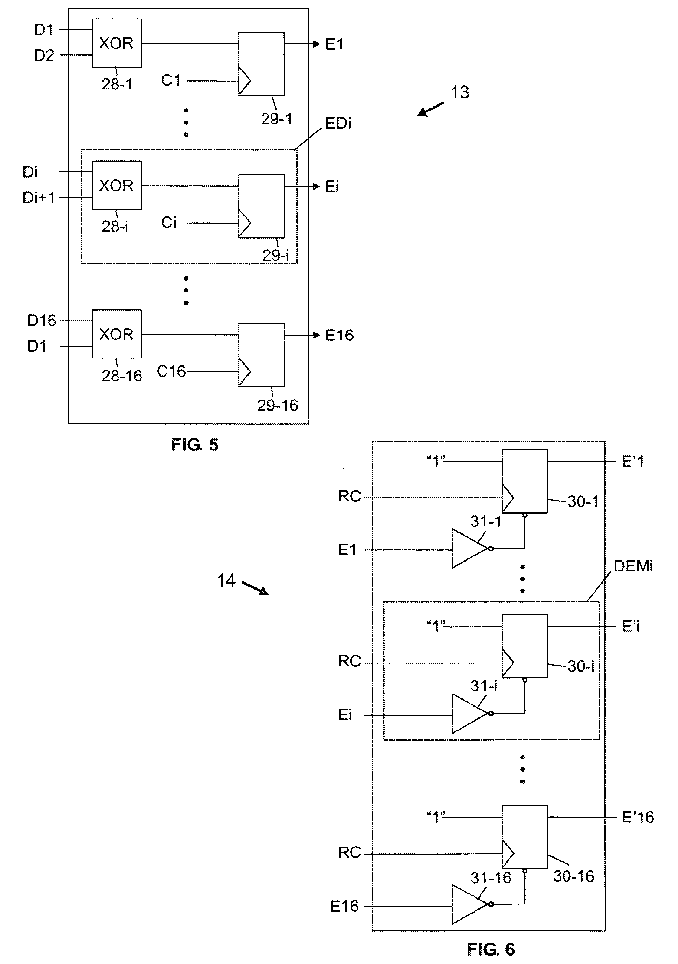

The edge detection circuit 13 is directly connected at the oversampling circuit 12 output and is responsible to detect a value change between two consecutive data samples. Now turning to FIG. 5, the edge detection circuit 13 is made of 16 edge detection elements, each one corresponding to a data sample. Let us consider edge detection element EDi, it consists of a XOR gate 28-i that compares the two consecutive data samples Di and Di+1. The comparison result Ei, i.e. the edge information, is stored in a flip-flop 29-i clocked by the same clock phase Ci as the first of the two samples to be compared. There are as many edge detection elements as there are data samples. When a data transition is detected between two consecutive data samples, the edge detection element output switches to the '1' level during a single clock period. As it will be better understood later on, to allow data selection circuit 19 to select the best data sample to recover, the edge information is collected during an extended period of time so that the data jitter with regards to oversampling clock phases is taken into account.

### 4. Description of the data edge memory block 14

The data edge memory block 14 is directly connected at the edge detection circuit 13 output. Now turning to FIG. 6, the data edge memory block 14 is made of 16 data edge memory elements, each one corresponding to a data sample. Thus, there are as many data edge memory elements as there are edge detection elements. The data edge memory block 14 is a first key feature of the present invention. Let us consider data edge memory element DEMi, it mainly consists of an asynchronous reset flip-flop (or a similar register element) 30-i which has its data input permanently set to '1' and its clock input connected to a reset signal RC. The RC clock signal generated by the control logic circuit 18, is a pulse used to reset periodically every data edge memory elements at the '1' value. In the preferred implementation, the RC signal period or edge sampling period, is tuned in a configuration register (not shown). The edge information signal Ei is applied to the asynchronous input via an inverter 31-i. In this preferred implementation, any edge information signal Ei at the '1' level, i.e. indicating the presence of a data edge, sets a '0' level in the corresponding flip-flop 30-i. The signal latched in flip-flop 30-i, labeled E'i, at this '0' level, is kept for an extended length of time such as several tenths or hundreds of clock periods. One advantage of using an asynchronous reset flip-flop is that it allows to collect data edge events during such an extended period of time very simply, however, other implementations could be envisioned as well. Another advantage is that it collects the edge information independently of their related oversampling clock phase. As a significant result, all signals derived therefrom could be exploited with a determined oversampling clock phase, e.g. C₁. In this preferred implementation, sixteen phases of a reference clock are thus used to collect sixteen data samples during each clock period.

The following examples illustrate the values of the E'₁ to E'₁₆ signals for different cases.
Example 1 represents E' values for single data rate (SDR) data without jitter. The position of the single '0' corresponds to the sample position where a data transition was detected.
   1 1 1 1 1 0 1 1 1 1 1 1 1 1 1 1
Example 2 represents E' values for single data rate (SDR) data with jitter. The transition position varies in time due to the presence of jitter, so that more than one data transitions are detected.
   1 1 1 0 0 0 1 1 1 1 1 1 1 1 1
   The zone filled with '0's corresponds to the grayed zone in the eye diagram of FIG. 1.
Example 3 represents E' values for double data rate (DDR) data without jitter. As there are now two bits of data per clock period, two data transition positions were detected.
   1 1 1 1 1 0 1 1 1 1 1 1 1 0 1 1
Example 4 represents E' values for DDR data with jitter. The presence of jitter on the incoming data stream has the effect of moving the detected data edge randomly around a central position. The effect on the E' values is to increase the width of the zones with adjacent '0's.
   1 1 1 1 0 0 0 1 1 1 1 1 0 0 0 1 Therefore, the edge information is presented under the form of a bit map. A bit set to '0' indicates that a data edge has been detected at this corresponding sample position during the duration of a previous edge search and a bit set to '1' indicates a sample position where no data edge was seen during the same duration. Assuming a reasonable level of jitter and further assuming the edge information is collected for a long duration compared to the data bit period, then the bit map appears as one zone (SDR) or two zones (DDR) filled with adjacent '0's (corresponding to the zone where data edges were detected) surrounded by adjacent '1's. The last bit map position is considered as adjacent to the first bit map position and conversely. Therefore, in the case of DDR data, the bit map contains two zones filled with '0's separated by zones filled with '1's and in the case of SDR data, the bit map contains one zone filled with '0's surrounded by a zone filled with '1's.

### 5. Description of the selection determination circuit 15

The selection determination circuit 15 is directly connected at the data edge memory block 14 output and has the essential role of determining which data sample(s) is (are) to be kept. In essence, it uses the memorized edge information to indicate which sample is the farthest from the data edges. At the input of this circuit, the edge information is thus presented under the form of a bit map with as many bits as there are samples. The selection determination circuit locates the edges of the zone(s) filled with '1's and progressively reduces the width of the zone until it only contains only one '1's. As this width reduction is performed alternatively on each side, then the remaining '0' points to the center of the zone where none data edge was located, i.e. it points to the data sample which is the farthest from the data edge position.

To recover the data when the incoming data stream is jittered, it is important to select the sample (in case of SDR data) or the samples (for DDR data) located the farthest from any possible position of a data edge. Looking now at the E' values shown in the above examples, selecting the best sample corresponds to localizing the middle of the zone filled with '1's. This is done with the repetition of the two-step algorithm described below.

In a first step, the particular pattern 110 is searched in the suite of the E' values to locate the right side of a zone filled with '1's. In the search for this right pattern (RP), the right most value of the suite of the E' values (E'₁₆ in this preferred implementation) is considered to be adjacent with the leftmost value of the suite of E' value (i.e. E'₁). Each time the 110 RP pattern is found, it is replaced by the 100 value, so that it effectively decreases the width of the zone filled with '1's by one unit and by the right side of the zone.

The second step of the algorithm searches for the 011 pattern which is characteristic of the left side of a zone filled with '1's in the suite of E' values. Similarly, in the search for this left pattern (LP), the leftmost value of the suite of the E' values (E'₁ in the preferred implementation) is considered to be adjacent with the rightmost value of the suite of E' values (i.e. E'₁₆). Each time the 011 LP pattern is found, it is replaced by the 001 value so that it effectively decreases the width of the zone filled with '1's by one unit and by the left side of the zone. This algorithm is repeated by successive iterations until the width of the zone filled with '1's is reduced to a single position, in other words it just remains one '1' (approximately, the central one in the zone).

When recovering SDR data, only one '1' value is found and this single value correspond to the position of the best sample to be kept as the recovered data. When recovering DDR data, two different '1's are kept corresponding to the positions of the best samples to be kept as the data to recover in the incoming data stream.

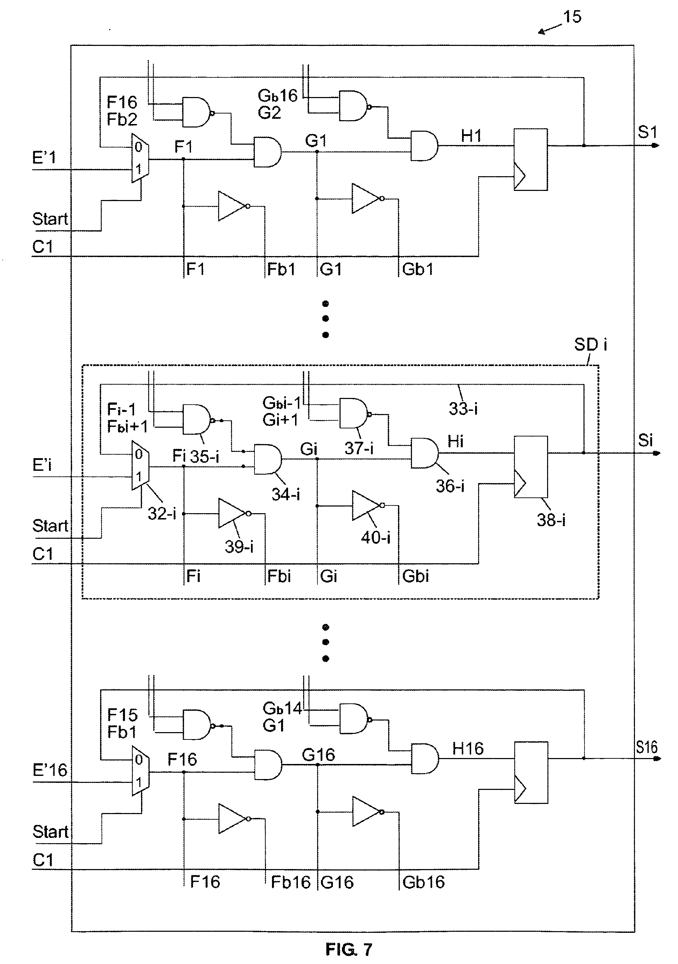

FIG. 7 shows a preferred hardware implementation of the above described algorithm that functionally performs these operations. The selection determination circuit 15 is another key feature of the present invention. Now turning to FIG. 7, the selection determination circuit 15 is made of sixteen selection determination elements SDi (i = 1 to 16), each one corresponding to a data sample. Thus, there are as many selection determination elements as there are data edge memory elements.

Let us consider Example 2 for the sake of simplicity, applying the above two-step algorithm to process the initial bit map, will result in the following bit sequences:
1 1 1 1 0 0 0 1 1 1 1 1 1 1 1 1
1 1 1 0 0 0 0 1 1 1 1 1 1 1 1 1 (1^{st} step RP, 1^{st} iteration)
1 1 1 0 0 0 0 0 1 1 1 1 1 1 1 1 (2^{sd} step LP, 1^{st} iteration)
1 1 0 0 0 0 0 0 1 1 1 1 1 1 1 1 (1^{st} step RP, 2^{sd} iteration)
and so on, until the following sequence is obtained:
0 0 0 0 0 0 0 0 0 0 0 0 0 1 0 0 (2^{sd} step LP, 6^{th} iteration)
indicating thereby that the fourteenth data sample is the best one. Still referring to FIG. 7, let us consider selection determination element SDi. A two-way selector 32-i receives signal E'i (output by data edge memory element DEMi) on a first input and the signal, referred to as the selection signal Si, generated by the whole element SDi via loop 33-i on a second input. Selector 32-i is controlled by signal labeled Start generated by the control logic block 18. The signal that is output from selector 32-i, labeled Fi, is applied to a first input of two-way AND gate 34-i, the other input of which receives the ANDing result between signals Fi-1 and Fbi+1 (NOT Fi+1) through two-way NAND gate 35-i. AND gates 34-i and 35-i thus implement the first step of the above described two-step algorithm. In turn, the signal Gi that is output from AND gate 34-i is applied to a first input of two-way AND gate 36-i, the other input of which receives the result of ANDing signals Gbi-1 (NOT Gi-1) and Gi+1 through two-way NAND gate 37-i to generate signal Hi. AND gates 36-i and 37-i thus implement the second step of the above described two-step algorithm. Finally, signal Hi is applied to the data input of flip-flop 38-i to latch selection signal Si. The clock input of flip-flop 38-i receives clock phase C₁. As apparent in FIG. 7, two INVERTER gates 39-i and 40-i respectively generates signals Fbi (NOT Fi) and Gbi (NOT Gi) from signals Fi and Gi.

As mentioned above, flip-flop 30-i (see FIG. 6) collects the edge information using its asynchronous reset input. At the end of the edge information sampling time, the selection signal Start of selector 32-i (delivered by the control logic circuit 18) switches to the '1' level during one clock period and then returns to '0'. When it returns to '0', flip-flop 30-i can be synchronously set to '1' by having its clock input switching to '1' then back to '0'. The signal at the output of the selector 32-i is combined using NAND, AND and INVERTER gates to execute the two steps of the above described algorithm. The F signal of the previous SD element (SDi-1), i.e. Fi-1, is combined in a NAND gate with the inverted F value of the next SD element (SDi+1), i.e. Fbi+1. The resulting signal is then ANDed with the Fi signal to form the Gi signal, thus effectively detecting the occurrence of the 110 pattern and forcing the middle '1' to a '0' when the pattern is found. Similarly, the Gi signal is combined with the G signal from adjacent SD element to detect the 011 pattern and replace the middle value thereof by a '0' when this pattern is found.

The Hi signal is captured in flip-flop 38-i at each clock phase C₁ rising edge to generate selection signal Si. By allowing the Hi signal to re-circulate through the selector 32-i via loop 33-i, one can see that the width of the zone initially filled with '1's at the flip-flop 38-i output of SDi element, will decrease until there is only one '1'. Extra iterations will be without any effect. The maximum number of iterations to be performed is equal to the fourth of the number of data samples in the case of DDR data (i.e. four iterations in the preferred implementation using sixteen samples per clock period) or one half of the number of data samples in the case of SDR data (i.e. eight iterations in the case of the preferred implementation). There is no penalty in having the data selection having to loop four or eight clock cycles as it is expected that the collection of data edges will last more time to ensure the data selection circuit 19 will take into account the data jitter.
FIG. 7 illustrates the assembly of 16 SD elements to build the totality of the selection determination circuit 15. The selection signals S(1:16) cannot be directly used to select the best data sample(s) to be kept as their values is subject to change between the different iterations. However, given the condition that the data edge collection delay in memory 14 is always greater than the iteration delay in circuit 15, the selection signals S(1:16) values are stored in a memory at the same time or just before taking new data edges are processed.

### 5. Description of the selection validation circuit 16

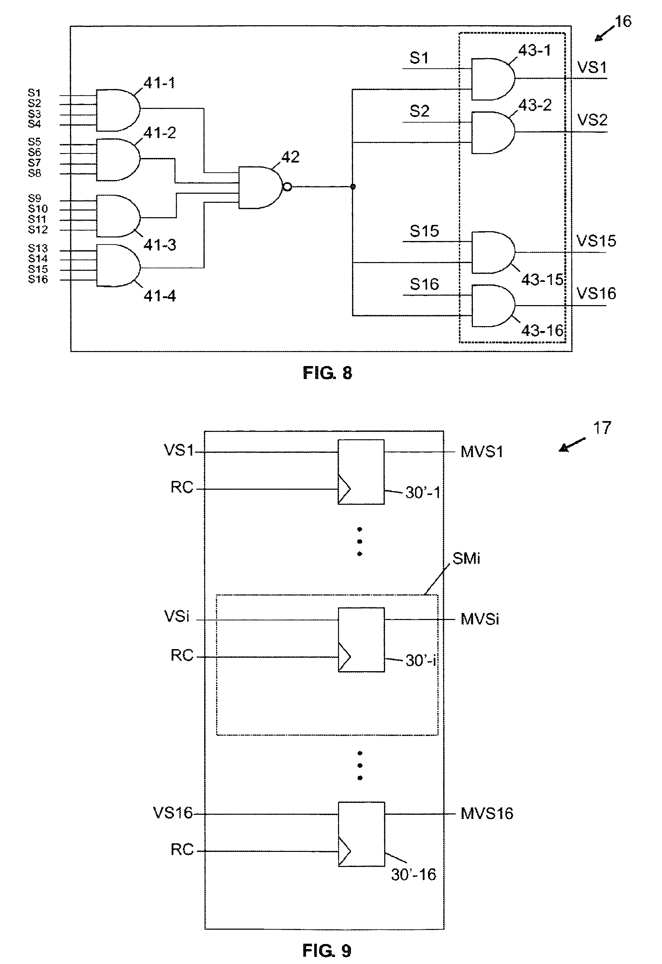

FIG. 8 shows a preferred implementation of the innovative selection validation circuit 16 of FIG. 2 which is another key feature of the present invention, because it has the essential role of validating the selection. Now turning to FIG. 8, a group of four four-way AND gates referenced 41-1 to 41-4 processes the selection signals S₁ to S₁₆, four per four. The outputs of these four AND gates are connected to the respective inputs of four-way NAND gate 42. In turn, the signal that is output from NAND gate 42 is applied to a first input of a battery of 16 two-way AND gates referenced 43-1 to 43-16. The respective selection signal is applied on the second input of each of these two-way AND gates, for instance selection signal S₁ is applied to AND gate 43-1 to generate signal VS₁ and so on.

If for some reasons, there is no data edge during the period between two RC (reset clock) signals, the selection determination circuit 15 will incorrectly indicate that each data sample is to be recovered by setting each selection signal S(1:16) to the '1' level. To avoid data recovery errors, the selection validation circuit 16 disable all selection signals when they all are at the '1' level. As apparent in FIG. 8, selection signals S₁ to S₁₆ are ANDed in two steps, first in AND gates 41-1 to 41-4, then in NAND gates 42 for technology reasons. As a result, NAND gate 42 output is at '1', if at least one selection signal is at '0' and at '0' otherwise. This output is then used as the validation signal for the selection signals S₁ to S₁₆. Therefore, VS₁ to VS₁₆ designate the selection signals that have been validated.
It is remarkable to notice that the determination of the best selection signals and their validation performed in circuits 15 and 16 only imply the use of only combinatorial logic instead of complex computation means such as a microprocessor.

### 6. Description of the selection memory block 17

At this point, it is important to memorize the validated values of the selection signals, i.e. VS₁ to VS₁₆, so that these values can be used while new data edges are processed and new selection signals are updated. Selection memory block 17 can have a similar construction to the data edge memory block 14. Now turning to FIG. 9, let us consider selection memory element SMi, which simply consists of asynchronous reset flip-flop 30'-i, the validated signal VSi is applied to its asynchronous input and its clock input connected to the reset signal RC. The signal latched in flip-flop 30'-i, labeled MVSi, is kept for an extended length of time such as several tenths or hundreds of the reference clock period. The memorized validated selection signals in flip-flops 30'-1 to 30'-16 are labeled MVS₁ to MVS₁₆ respectively.

### 7. Description of the data sample selection circuit 19

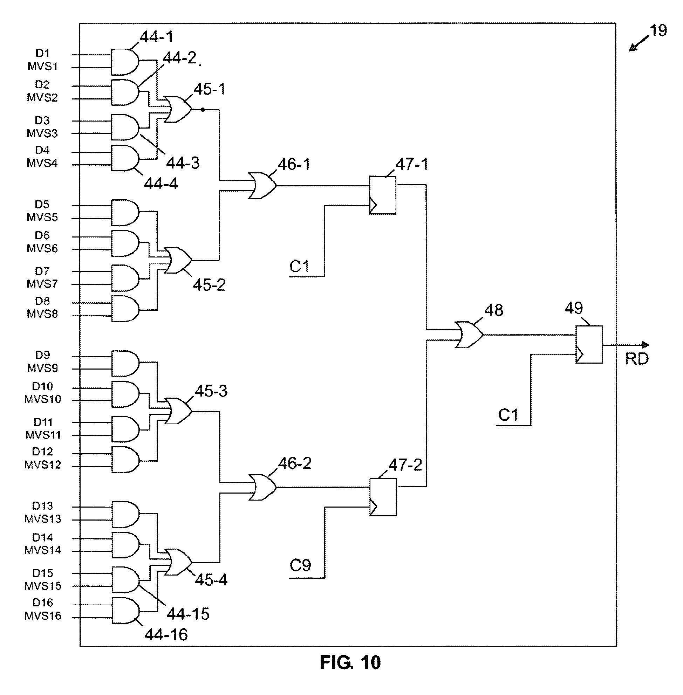

The data sample selection circuit 19 is depicted in FIG. 10. It first includes four groups of four two-way AND gates referenced 44-1 to 44-16. In each group, the output of the four AND gates is connected to one input of a four-way OR gate. As apparent in FIG. 10, these OR gates are referenced 45-1 to 45-4. The outputs of OR gates 45-1 and 45-2 are connected to an input of a two-way OR gate 46-1. Likewise, the outputs of OR gates 45-3 and 45-4 are connected to an input of a two-way OR gate 46-2. The output of OR gate 46-1 is connected to the data input of flip-flop 47-1 whose clock input receives clock phase C₁. Similarly, the output of OR gate 46-2 is connected to the data input of flip-flop 47-2 whose clock input receives clock phase C₉ (in phase opposition with clock phase C₁). Signals latched in flip-flops 47-1 and 47-2 are applied to two-way OR gate 48, the output of which is connected to the data input of flip-flop 49. Its clock input is driven by clock phase C₁. The signal latched in flip-flop 49 is the recovered data RD.
The data selection circuit 19 shown in FIG. 10 illustrates how the memorized selection signals are exploited to recover the data. The best data sample is selected using AND gates (or AND-OR gates). The different combinations are then further combined using OR gates. If the data to recover is coming from the D₁ to D₈ range, it can be safely captured by the C₁ clock phase. On the contrary, if it comes from the D₉ to D₁₆ range, it is captured by the C₉ clock phase. The OR gate 48 then combines the data coming from flip-flops 47-1 and 47-2 and the recovered data RD is captured by the C₁ clock phase.

In the case of DDR data, two circuits 19'/19" identical to the data sample selection circuit 19 of FIG. 10 would then be necessary. An additional requirement would be that each circuit uses two different set of memorized validated selection signals MVS(1:16), each one pointing a different data sample to recover. Such a circuit able to split the present set of the validated selection signals VS(1:16) in two sets is not shown but could be easily designed by an ordinary skilled professional.

### Conclusion

The improved data recovery circuit 10 schematically shown in FIG. 2 is very simple and do not require high speed performance. The disclosed method is based on collecting all data edges, then locating the edges in the sampling window in the eye diagram and finally locating the zone of stable data where the data can be safely recovered. The disclosed method allows to take into account the random data jitter. Because it is only based on data edge detection, it is does not depend on the data communication protocol that is used.

While the invention has been particularly described with respect to a preferred embodiment thereof it should be understood by one skilled in the art that the foregoing and other changes in form and details may be made therein without departing from the scope of the invention.

## Claims

1. A data recovery circuit (10) for recovering the best data sample in a set of data samples obtained by oversampling the data to recover in an incoming stream of data bits said data recovery circuit comprising:
a data input (In) for receiving said incoming stream of data bits (DD) serially transmitted on a high speed communication link with jitter and skew at a specified data rate synchronous with a reference clock; oversampling means (12) coupled to said data input, for sampling the data bits to recover by the n phases (C₁, ... , Cₙ) of said reference clock signal (clk) generated by a multiphase clock signal generator (11), and for producing a set of data samples (D₁, ... ,Dₙ) during each reference clock period;
edge detection means (13) coupled to said oversampling means, for comparing at least two consecutive data samples and to generate a corresponding set of signals (E, ... , Eₙ) representing data edge information indicative of the data edge or transition positions, so that when a data edge is detected between said at least two consecutive data samples, the data edge information signal is at a determined binary logic level and at the opposite binary logic level otherwise;
said data recovery circuit **characterised by** further comprising
first memory means (14) coupled to said edge detection means, for collecting the data edge information in a corresponding set of signals (E'₁, ... , E'₄) presented in the form of a map of n bits for a plurality of clock cycles, wherein the data edge information signal is at a first binary logic level for detected data edges and at a second binary logic level otherwise, and wherein the last bit map position is considered as adjacent to the first bit map position and conversely; selection determination means (15), coupled to said first memory means, for using the memorized data edge information signals to generate selection signals (S₁, ... , Sₙ) by locating the zone filled with binary values representative of said second binary logic level in said bit map and reducing its width by performing successive iterations alternatively on the two sides of the zone until it only contains one value at said second binary logic level, which points to the center of the zone where no data edge was detected, allowing thereby to select the corresponding data sample which is the farthest of the data edge positions;
selection validation means (16) coupled to said selection determination means for validating said selection signals by generating validated selection signals (VS₁, ... , Vs) only in a case where the n bits of the map are not all at the same value, to avoid false determination due to jitter/skew; second memory means (17) coupled to said selection validation means for memorizing the validated values of said selection signals in a corresponding set of signals (MVS₁, ... , MVSₙ); and,
data sample selection means (19) coupled to said oversampling means for receiving the data samples (D₁, ... , Dₙ) and coupled to said second memory means for receiving said memorized values of validated selection signals (MVS₁, ... , MVSₙ), and for generating the recovered data (RD) using said data samples and said memorized values.

2. The data recovery circuit of claim 1 wherein in said selection determination circuit the reduction is performed on a set of three successive bits.

3. The data recovery circuit of claim 2 wherein said first and second binary logic levels are 0 and 1 respectively and for the reduction on the left of the bit map said set of three successive bits is 110 which is transformed in 100 and for the reduction on the right of the bit map, said set of three bits is 011 which is transformed in 001.

4. Method for recovering the data in an incoming data stream with jitter and skew with respect to a reference clock by selecting the best data sample in a set of data samples obtained by oversampling said incoming data stream comprising the steps of:
oversampling the incoming data stream with the n phases of the reference clock to generate a set of n data samples;
detecting the position of the data edges or transitions in the set of data samples and creating a map of n bits, representing the edge positions, by assigning a determined binary logic value to said data edge positions and the opposite value otherwise;
memorizing the map of n bits wherein the bits are at a first binary logic level for detected data edges and at a second binary logic level otherwise and wherein the last bit map position is considered as adjacent to the first bit map position and conversely;
said method **characterised by** further comprising the steps of:
locating the zone filled with binary values representative of said second binary logic level in said bit map and reducing its width by performing successive iterations alternatively on the two sides of the zone until it only contains one value at said second binary logic level, which points to the center of the zone where no data edge was detected, thereby determining which data sample is the farthest from the data edges, i.e. which data sample is the best candidate for the data to recover;
validating said selection signals by generating validated selection signals only in a case where the n bits of the map are not all at the same value, to avoid false determination due to jitter and skew;
memorizing said validated selection signals; and,
using said memorized validated selection signals and said data samples to select the best data sample to represent the recovered data.

5. The method of claim 4 wherein the bit map is memorized during several reference clock periods.

6. The method of claim 4 wherein said determination consists to compare two consecutive data samples and to generate a corresponding set of signals representing the data edge information, i.e. the data edge positions, so that when a transition is detected between two consecutive data samples the signal is a a first logic level (e.g. '1') and at a second logic level (i.e. '0') otherwise.

7. The method of claim 4 wherein said oversampling is performed by using the multiple phases of a reference clock.

## Patentansprüche

1. Datenrückgewinnungs-Schaltung (10) zum Wiederherstellen der besten Abtastung in einem Satz von Datenabtastungen, die durch Überabtasten der wiederherzustellenden Daten in einem eingehenden Strom von Datenbits erhalten wurden, wobei die Datenrückgewinnungs-Schaltung das Folgende umfasst:
einen Dateneingang (In) zum Empfangen des eingehenden Stroms von Datenbits (DD), der seriell auf einer Datenübertragungsverbindung hoher Geschwindigkeit mit Jitter und Phasenverschiebung bei einer vorgegebenen Datenrate synchron mit einem Referenztakt übertragen wurde;
ein Überabtastungsmittel (12), das mit dem Dateneingang verbunden ist, zum Abtasten der Datenbits, um die n Phasen (C₁, ... Cₙ) des Referenz-Taktsignals (clk), das mit einem Mehrphasen-Taktgenerator (11) erzeugt wurde, wiederherzustellen und einen Satz von Datenabtastungen (D₁, ..., Dₙ) während jeder Referenztakt-Periodendauer zu erzeugen;
ein Flanken-Erkennungsmittel (13), das mit den Überabtastungsmitteln verbunden ist, um wenigstens zwei aufeinanderfolgende Datenabtastungen zu vergleichen und einen entsprechenden Satz von Signalen (E₁, ..., Eₙ) zu erzeugen, die die Flankendaten zum Kennzeichnen der Datenflanken- oder -Übergangsposition wiedergeben, sodass beim Erkennen einer Datenflanke zwischen den wenigstens zwei aufeinanderfolgenden Datenabtastungen das Datenflanken-Informationssignal einen vorbestimmten binären Logikpegel und ansonsten den entgegensetzten binären Logikpegel annimmt;
wobei die Datenrückgewinnungs-Schaltung das Folgende umfasst:
ein erstes Speichermittel (14), das mit den Flankenerkennungsmitteln verbunden ist, um die Datenflanken-Informationen in einem entsprechenden Satz von Signalen (E'₁, ..., E'ₙ) zusammenzuführen, die in der Form eines n-Bit-Abbildes (map of n bits) für eine Vielzahl von Taktzyklen dargestellt werden, wobei das Datenflanken-Informationssignal einen ersten binären Logikpegel und ansonsten einen zweiten binären Logikpegel annimmt und die letzte Position des Bit-Abbildes als benachbart zu der ersten Position des Bit-Abbildes und umgekehrt betrachtet wird;
Auswahl-Festlegungsmittel (15), die mit den ersten Speichermitteln verbunden sind, um die gespeicherten Datenflanken-Informationssignale zum Erzeugen von Auswahlsignalen (S₁, ..., Sₙ) zu verwenden, indem der mit den Binärwerten, die den zweiten binären Logikpegel in dem Bit-Abbild wiedergeben, gefüllte Bereich ermittelt und seine Breite durch das Ausführen aufeinanderfolgender Iterationen abwechselnd an den beiden Seiten des Bereichs verringert wird, bis er nur einen Wert bei dem zweiten binären Logikpegel enthält, der auf den Mittelpunkt des Bereichs verweist, an dem keine Datenflanke ermittelt wurde, wodurch das Auswählen der entsprechenden Datenabtastung ermöglicht wird, die von den Datenflanken-Positionen am weitesten entfernt ist;
Auswahl-Bestätigungsmittel (16), die mit den Auswahl-Festlegungsmitteln verbunden sind, um die Auswahlsignale mittels dem Erzeugen von bestätigten Auswahlsignalen (VS₁, ..., VSₙ) nur in einem Fall, in dem die n Bits des Bit-Abbildes nicht alle denselben Wert aufweisen, zu bestätigen, um eine falsche Ermittlung aufgrund von Jitter/Phasenverschiebung zu vermeiden.
zweite Speichermittel (17), die mit dem Auswahl-Prüfmitteln verbunden sind, zum Speichern der bestätigten Werte des Auswahlsignale in einem entsprechenden Satz von Signalen (MVS₁, ..., MVSₙ) ; und
Datenabtast-Auswahlmittel (19), die mit den Überabtastmitteln zum Empfangen der Datenabtastungen (D₁, ..., Dₙ) und mit den zweiten Speichermitteln zum Empfangen der gespeicherten Werte der bestätigten Auswahlsignale (MVS₁, ..., MVSₙ) und zum Erzeugen der wiederhergestellten Daten (RD) unter Verwendung der Datenabtastungen und der gespeicherten Werte verbunden sind.

2. Daten-Rückgewinnungsschaltung nach Anspruch 1, wobei in der Auswahl-Festlegungsschaltung die Verringerung an einer Menge von drei aufeinanderfolgenden Bits ausgeführt wird.

3. Daten-Rückgewinnungsschaltung nach Anspruch 2, wobei es sich bei dem ersten bzw. zweiten Logikpegel um 0 bzw. 1 handelt und es sich bei der Verringerung auf der linken Seite des Bit-Abbildes bei der Menge von drei aufeinanderfolgenden Bits um 110, was in 100 umgeformt wird und, und bei der Verringerung auf der rechten Seite des Bit-Abbildes bei der Menge von drei aufeinanderfolgenden Bits um 011 handelt, was in 001 umgeformt wird.

4. Verfahren zum Wiederherstellen der Daten in einem eingehenden Datenstrom mit Jitter und Phasenverschiebung in Bezug auf einen Referenztakt, indem die beste Datenabtastung in einem Satz von Datenabtastungen ausgewählt wird, der durch Überabtasten des eingehenden Datenstroms erhalten wurde, wobei das Verfahren die folgenden Schritte umfasst:
Überabtasten des eingehenden Datenstroms mit den n Phasen des Referenztaktes, um einen Satz von n Datenabtastungen zu erzeugen;
Ermitteln der Position der Datenflanken oder -übergänge in dem Satz von Datenabtastungen und Erzeugen eines n-Bit-Abbildes, wobei die n Bits Flankenpositionen wiedergeben, indem ein ermittelter binärer Logikwert den Datenflanken-Positionen und andernfalls der entgegengesetzten Wert zugewiesen wird;
Speichern des n-Bit-Abbildes, worin sich die Bits einen ersten binären Logikpegel für ermittelte Datenflanken und andernfalls einen zweiten binären Logikpegel annehmen und worin die letzte Bit-Abbildes als benachbart zu der ersten Position des Bit-Abbildes betrachtet wird und umgekehrt;
wobei das Verfahren **dadurch gekennzeichnet ist, dass** es ferner die folgenden Schritte umfasst:
Auffinden des Bereichs, der mit Binärwerten gefüllt ist, die den zweiten Logikpegel in dem Bit-Abbild wiedergeben, und Verringern seiner Breite durch das aufeinanderfolgendes Ausführen von Iterationen abwechselnd auf den beiden Seiten des Bereichs, bis er nur einen Wert bei dem zweiten Logikpegel enthält, der auf die Mitte des Bereichs verweist, wo keine Datenflanke ermittelt wurde, wodurch ermittelt wird, welche Datenabtastung am weitesten von den Datenflanken entfernt ist, d.h., bei welcher Datenabtastung es sich um den besten Kandidaten für die wiederherzustellenden Daten handelt;
Bestätigen der Auswahlsignale durch das Erzeugen bestätigter Auswahlsignale nur in einem Fall, bei dem die n Bits des Bit-Abbildes nicht alle denselben Wert aufweisen, um eine falsche Ermittlung wegen Jitter und Phasenverschiebung zu vermeiden;
Speichern der bestätigten Auswahlsignale; und
Verwenden der gespeicherten bestätigten Auswahlsignale und der Datenabtastungen zum Auswählen der besten Datenabtastung, um die wiederhergestellten Daten wiederzugeben.

5. Verfahren nach Anspruch 4, wobei das Bit-Abbild während mehreren Referenztakt-Perioden gespeichert wird.

6. Verfahren nach Anspruch 4, wobei die Ermittlung das Vergleichen von zwei aufeinanderfolgenden Datenabtastungen und das Erzeugen eines entsprechenden Signalsatzes umfasst, der die Datenflanken-Informationen enthält, d.h. die Positionen der Datenflanken, sodass beim Erkennen eines Übergangs zwischen zwei aufeinanderfolgenden Datenabtastungen das Signal einen ersten Logikpegel (z.B. '1') und ansonsten einen zweiten Logikpegel (z.B. '0') annimmt.

7. Verfahren nach Anspruch 4, wobei das Überabtasten unter Verwendung der mehreren Phasen eines Referenztaktes ausgeführt wird.

## Revendications

1. Un circuit de récupération de données (10), pour récupérer le meilleur échantillon de données dans un jeu d'échantillons de données, obtenu par suréchantillonnage des données afin de récupérer dans un flux entrant de bits de données, ledit circuit de récupération de données comprenant :
une entrée de données (In), pour recevoir ledit flux entrant de bits de données (DD), transmis de façon sérielle sur une liaison de communication à haute vitesse présentant un phénomène de gigue et de dérive, à un débit de données spécifié, avec une horloge synchrone ;
des moyens de suréchantillonnage (12), couplés à ladite entrée de donnée, pour échantillonner les bis de données pour récupération par les n phases (C₁, ... , Cₙ) dudit signal d'horloge de référence (clk) généré par un générateur de signal d'horloge multiphase (11), et pour produire un jeu d'échantillons de données (D₁, .., Dₙ) durant chaque période d'horloge de référence ;
des moyens de détection de bords (13), couplés auxdits moyens de suréchantillonnage (12), pour comparer au moins deux échantillons de données consécutifs et pour générer un jeu correspondant de signaux (E₁, ... , En) représentant une information de bord de données, indicative des positions de bord ou de transition des données, de manière que, lorsqu'un bord de données est détecté, entre lesdits au moins deux échantillons de données consécutifs, le signal d'information de bord de données se trouve à un niveau logique binaire déterminé, ou, sinon, au niveau logique binaire opposé ;
ledit circuit de récupération de données étant **caractérisé par** le fait de comprendre en outre :
des premiers moyens de mémoire (14), couplés auxdits moyens de détection de bord, pour collecter l'information de bord de données dans un jeu correspondant de signaux (E₁, ... , En), présenté sous la forme d'une carte de n bits, pour une pluralité de cycles d'horloge, dans lequel le signal d'information de bord de données se trouve au premier niveau logique binaire, pour des bords de données détectés et, sinon, à un second niveau logique binaire, et dans lequel la dernière position de carte de bits est considérée comme adjacente à la première position de carte de bits, et inversement ;
des moyens de détermination de sélection (15), couplés auxdits premiers moyens de mémoire, pour utilisation des signaux d'information de bord de données mémorisés afin de générer des signaux de sélection (S₁, ... , Sₙ), par localisation de la zone remplie par des valeurs binaires, représentatives dudit second niveau logique binaire, dans ladite carte de bits, et réduction de sa largeur en accomplissant des itérations successives, alternativement sur les deux côtés de la zone, jusqu'à ce qu'elle ne contienne qu'une seule valeur audit second niveau logique binaire, qui pointe au centre de la zone dans laquelle aucun bord de données n'a été détecté, permettant de cette manière de sélectionner l'échantillon de données correspondant qui est le plus éloigné des positions de bord de données ;
des moyens de validation de sélection (16), couplés auxdits moyens de détermination de sélection, pour valider lesdits signaux de sélection, par génération de signaux de sélection validés (VS, ... , Vs), uniquement dans un cas dans lequel les n bits de la carte ne sont pas tous à la même valeur, afin d'éviter une fausse détermination, imputable à de la gigue/dérive ;
des deuxièmes moyens mémoire (17), couplés auxdits moyens de validation de sélection, pour mémoriser les valeurs validées desdits signaux de sélection dans un jeu correspondant de signaux (MVS₁, ... , MVSₙ) ; et
des moyens de sélection d'échantillon de données (19), couplés auxdits moyens de suréchantillonnage, pour recevoir les échantillons de données (D₁, ... , Dₙ), et couplés auxdits deuxièmes moyens mémoire, pour recevoir lesdites valeurs mémoriser des signaux de sélection validés (MVS₁, ... , MVSₙ), et pour générer les données récupérées (RD) en utilisant lesdits échantillons de données et lesdites valeurs mémorisées.

2. Le circuit de récupération de données selon la revendication 1, dans lequel, dans ledit circuit de sélection de détermination, la réduction est accomplie sur un jeu de trois bits successifs.

3. Le circuit de récupération de données selon la revendication 1, dans lequel lesdits premier et second niveaux logiques binaires sont respectivement de 0 et 1 et, pour la réduction sur la gauche de la carte de bits, ledit jeu de trois bits successifs est de 110, transformé en 100 et, pour la réduction sur la droite de la carte de bits, ledit jeu de trois bits est de 011, transformé en 001.

4. Procédé de récupération de données dans un flux de données entrant, présentant un phénomène de gigue et de dérive par rapport à une horloge de référence, par sélection du meilleur échantillon de données dans un jeu d'échantillons de données, obtenu par suréchantillonnage dudit flux de données entrantes, comprenant les étapes consistant à :
suréchantillonner le flux de données entrantes avec les n phases de l'horloge de référence, afin de générer un jeu de n échantillons de données ;
détecter la position des bords ou transitions de données, dans le jeu d'échantillons de données, et créer une carte de n bits, représentant les positions de bords, par affectation d'une valeur logique binaire déterminée auxdites positions de bords de données, et, sinon, la valeur opposée ;
mémoriser la carte de n bits, dans lequel les bits sont à un premier niveau logique binaire, pour des bords de données détectés et, sinon, à un second niveau logique binaire, et dans lequel la dernière position de carte de bits est considérée comme adjacente à la première position de carte de bits, et inversement ;
ledit procédé étant **caractérisé par** le fait de comprendre en outre les étapes consistant à :
localiser la zone remplie par des valeurs binaires, représentatives dudit second niveau logique binaire, dans ladite carte de bits, et réduire sa largeur en accomplissant des itérations successives, alternativement sur les deux côtés de la zone, jusqu'à ce qu'elle ne contienne qu'une seule valeur audit second niveau logique binaire, qui pointe au centre de la zone dans laquelle aucun bord de données n'a été détecté, permettant de cette manière de déterminer quel est l'échantillon de données qui est le plus éloigné des positions de bord de données, c'est-à-dire quel échantillon de données est le meilleur candidat pour les données à récupérer ;
valider lesdits signaux de sélection, par génération de signaux de détection validés, uniquement dans un cas dans lequel les n bits de la carte ne sont pas tous à la même valeur, afin d'éviter une fausse détermination, imputable à de la gigue/dérive ;
mémoriser lesdits signaux de sélection validés ; et
utiliser lesdits signaux de sélection validés mémorisés et lesdits échantillons de données, pour sélectionner le meilleur échantillon de données, pour représenter les données récupérées.

5. Le procédé selon la revendication 4, dans lequel la carte de bits est mémorisée durant plusieurs périodes d'horloge de référence.

6. Le procédé selon la revendication 4, dans lequel ladite détermination consiste à comparer deux échantillons de données successifs et à générer un jeu correspondant de signaux, représentant l'information de bord de données, c'est-à-dire les positions de bord de données, de manière que, lorsqu'une transition est détectée entre deux échantillons de données consécutives, le signal se trouve à un premier niveau logique (par exemple '1' et, sinon, à un deuxième niveau logique (c'est-à-dire '0').

7. Le procédé selon la revendication 4, dans lequel ledit suréchantillonnage est accompli en utilisant les phases multiples d'une horloge de référence.
